# EUROPEAN PATENT APPLICATION

(11) **EP 1 903 739 A1**
(43) Date of publication of application: **26.03.2008**
(21) Application number: 06019892.6
(22) Date of filing: 22.09.2006
(51) Int. Cl.: H04L 29/06, H04Q 7/38

(54) **S-CSCF re-assignment by receiving non-REGISTER request for unregistered IMS users**

(71) Applicant: Nokia Siemens Networks GmbH & Co. KG, 81541 München (DE)
(72) Inventor: Leis, Peter, 82377 Penzberg (DE); Shen, Jiadong, Dr., 81379 München (DE); Wiehe, Ulrich, 36251 Bad Hersfeld (DE)

(57) **Abstract**

Re-assigning Serving Call Session Control Function, S-CSCF (307), services to an un-registered user, hereafter the user, who is of a Home Subscriber Server, HSS (300), in a Third Generation Partnership Program, 3GPP, telecommunications network. Previously an S-CSCF (307) services to the user including a registration procedure is assigned, but access by the user to the S-CSCF (307) services is erroneously lost. The S-CSCF (307) server previously selected is re-selected if that S-CSCF (307) is presently available. In case that the S-CSCF (307) is not available, the I-CSCF (306) is caused to not reject a request to reassign the user. The HSS (300) reassigns the S-CSCF (307) contained in a Cx-SAR request (504) to the user and providing a user profile of the unregistered user to a new S-CSCF (307).

## Description

Within the IM CN subsystem IMS as defined by 3GPP the so called Serving Session Control Function S-CSCF is the central point to users that are hosted by this S-CSCF. According to 3GPP TS 23.228 the S-CSCF provides these services to registered and unregistered users when it is assigned to these users. This assignment is stored in the Home Subscriber Server HSS.

Though mechanisms at the network element layer like cluster solution could be used to improve the reliability of the S-CSCF, it is inevitable to have a failover mechanism at the network layer to ensure the availability of the network service. Therefore S-CSCF re-assignment shall be possible.

For unregistered users, the assignment of the S-CSCF 100 will happen when the first SIP message for an unregistered user arrives at an S-CSCF 100. This S-CSCF 100 will then treat the user as an unregistered user and try to download the user profile from the HSS 103 via a Cx-SAR request 101. If no S-CSCF 100 is assigned to this user at this moment, the HSS 103 will then assign an S-CSCF 100 to this user and provide the user profile to the S-CSCF via a Cx-SAA response 102.

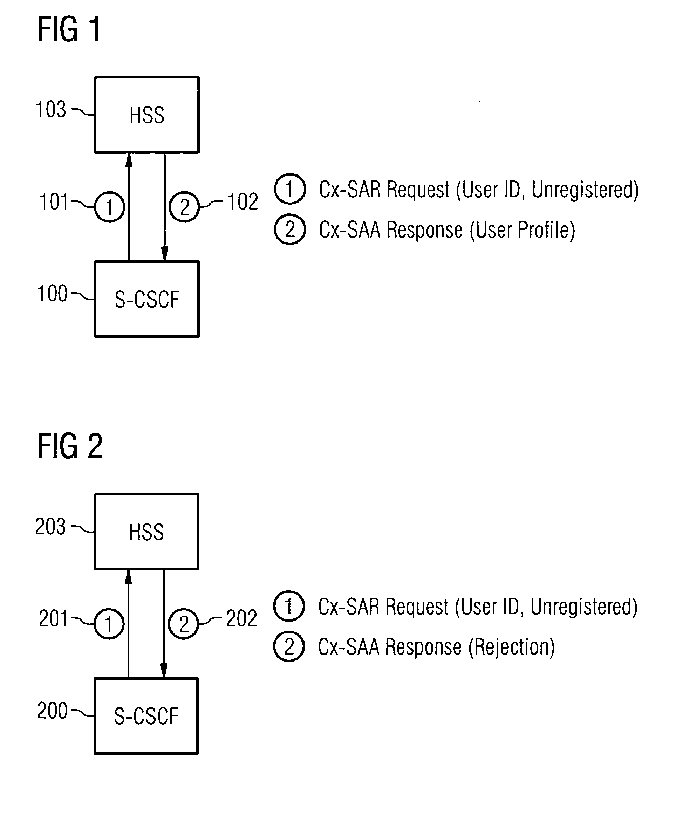

In Figure 2, an S-CSCF 200 re-assignment is not possible for the unregistered user, according to the current procedures as per 3GPP TS 23.228. If an S-CSCF was already assigned to an unregistered user, the HSS 203 will reject the Cx-SAR request 201 coming from another S-CSCF. So when the currently assigned S-CSCF is not available for an unregistered user, temporarily or permanently, no service can be provided for this unregistered user and a rejection response 202 is returned.

It is worthwhile to note that according to 3GPP TS 23.228 services like a voice mail box can also be provided to unregistered users.

According to 3GPP TS 23.228 it is possible to re-assign an S-CSCF to the IMS user when this user tries to register with the IMS via a SIP REGISTER request sent to the S-CSCF. In this case the registration status of the user is changed and therefore this is not a solution for an unregistered user. In addition there are IMS users who do not register with the IMS at all, e.g. the so called Public Service Identity (PSI), which represents a service identity.

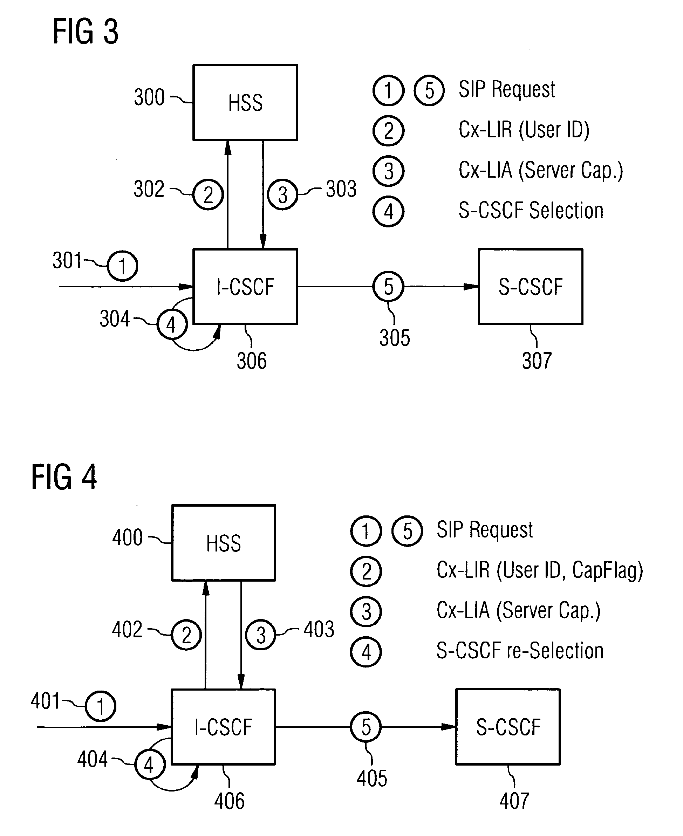

Another problem in the current IMS standard is that an I-CSCF can only select an S-CSCF for an IMS user when it receives a terminating request and when no S-CSCF is assigned to the user. This is shown in Figure 3, wherein the HSS 300 return the Server Capabilities of the user to the I-CSCF 306. The I-CSCF will then select an S-CSCF 307 for the user according to the capabilities, from a list of S-CSCFs stored at the I-CSCF.

As shown in Figure 3, if an S-CSCF 306 has already been assigned to the user and the HSS 300 return an S-CSCF address to the I-CSCF 307 via a Cx-LIA response (303) 303, no S-CSCF re-selection is allowed for an I-CSCF 307. In operation, the I-CSCF 306 receives an SIP Request 301, which in run sends an Cx-LIR (UerID) message 302 to the HSS 300 and the HSS 300 sends an Cx-LIA (ServerCapS-CSCF Addr.) message 303 back, containing the S-CSCF address. The I-CSCF 306 then sends the message to thean S-CSCF message to itself indicated in the Cx-LIA response.

So when the currently assigned S-CSCF for the user is not available, the I-CSCF cannot re-select another S-CSCF for the user. It has to reject the request. So no service can be provided in this case.

The only way to solve the problem is to remove the S-CSCF assignment to the unregistered user via administrative means. After that the I-CSCF can select a new S-CSCF for the user and the selected S-CSCF can download the user profile from the HSS (see Figure 1). This will usually be done for all users assigned with this S-CSCF. Since the removal of the S-CSCF assignment will cause Cx-RTR request to the S-CSCF, the removal of the S-CSCF assignment for all users hosted by the S-CSCF will introduce additional load burst at the HSS, which could lead to an overload situation at the HSS. Furthermore the administrative removal of the S-CSCF assignment will usually involve service staff of operators and cause additional OPEX.

The idea of this proposal is i) to allow S-CSCF re-assignment by Cx-SAR request for unregistered IMS users in case the previously selected S-CSCF is unavailable; ii) to enhance the Cx-LIA request (302) to allow the I-CSCF explicitly require the server capabilities of an user for S-CSCF re-selection.

The present invention is provided by a method for re-assigning Serving Call Session Control Function, S-CSCF (307), services to an un-registered user, hereafter the user, who is of a Home Subscriber Server, HSS (300), in a Third Generation Partnership Program, 3GPP, telecommunications network. Previously an S-CSCF (307) services to the user including a registration procedure is assigned, but access by the user to the S-CSCF (307) services is erroneously lost. The S-CSCF (307) server previously selected is re-selected if that S-CSCF (307) is presently available. In case that the S-CSCF (307) is not available, the I-CSCF (306) is caused to not reject a non-REGISTER request, but to reassign reselect a S-CSCF for the user. The HSS (300) re-assigns the S-CSCF (307) contained in a Cx-SAR request (504) to the user and providing a user profile of the unregistered user to a new S-CSCF (307).

The specification shall make reference to the following abbreviations.
- CSCF: Call Session Control Function
- S-CSCF: Serving CSCF
- P-CSCF: Proxy CSCF
- I-CSCF: Interrogating CSCF
- HSS: Home Subscriber Server
- IMS: IP Multimedia Subsystem
- 3GPP: 3rd Generation Partnership Project
- LIR: Location Information Request
- LIA: Location Information Answer
- SAR: Server Assignment Request
- SAA: Server Assignment Answer
- RTR: Registration Termination Request
- RTA: Registration Termination Answer
- PPR: Push Profile Request
- PPA: Push Profile Answer
- PSI: Public Service Identity
- AS: Application Server

The following advantages are provided by the proposal:
• an automatic mechanism of S-CSCF failover can be provided to unregistered IMS users. No involvement of service staff of operators is required. Therefore no additional OPEX will be generated.
• The failover procedure only takes place when a request for an unregistered IMS user arrives. This can avoid a possible overload situation at the HSS caused by the administrative removal of the S-CSCF, where a flood of requests will be sent from the HSS to the previously assigned S-CSCF to remove the assignment.
• the existing Cx-SAR/SAA and Cx-LIR/LIA operations are re-used with extensions. This will only cause limited impact on the existing specification/implementations.
• The proposal is easily to be verified by checking the Cx-SAR/SAA and Cx-LIR/LIA message.

### i. S-CSCF Reassignment for unregistered user via the extended Cx-SAR/SAA operation

Fig. 1 illustrates the prior art,
Fig. 2 illustrates the problem of the un-registered user,
Fig. 3 illustrates the problem in more detail,
Fig. 4 illustrates the solution of the present invention,
Figs. 5 and 6 illustrate case examples of the invention in operation.

When the HSS receives a Cx-SAR request for an unregistered IMS user and the S-CSCF address in the Cx-SAR request is different than the S-CSCF address stored as assigned for that user at the HSS, the HSS shall firstly check the availability of the S-CSCF, whose address is stored at the HSS. If the S-CSCF is not available at the moment, the HSS shall re-assign the S-CSCF contained in the Cx-SAR request to the user and provide the user profile of the unregistered user to the new S-CSCF (see Figure 1). If the old assigned S-CSCF is available, the Cx-SAR request shall be rejected by the HSS (see Figure 2). This is different to the current IMS standard procedures as per 3GPP TS 23.228 where the HSS shall reject such a Cx-SAR request. So this is an extension to the Cx-SAR/SAA operation.

How the availability of the S-CSCF is checked by the HSS is an implementation issue. There are at least two possibilities: a) using the Diameter peer state table, where the connection states of S-CSCFs are stored. An S-CSCF is unavailable if its state is "Closed" or "Closing"; b) or the HSS sends a Cx-PPR request containing the current user profile or charging function address to the S-CSCF, and if no response is received, the S-CSCF is then unavailable.

The proposal described under point i) is enough to solve the problem when the SIP request is sent directly to the new S-CSCF, e.g. by an Application Server (AS). But if the request is firstly sent to an I-CSCF, the enhancement described under point ii) is needed so that a new S-CSCF can be selected by the I-CSCF.

### ii. S-CSCF Reselection by receiving an terminating non-REGISTER request via the extended Cx-LIR/LIA operation

When an I-CSCF receives a terminating non-REGISTER request and finds that the assigned S-CSCF is not available, it shall not reject the request, as according to the current procedures described in 3GPP TS 23.228. The I-CSCF 400 shall conduct the S-CSCF re-selection procedure described in Figure 4. In operation, the I-CSCF 400 receives an SIP Request 401, which in run sends an Cx-LIR (UerID) message 302 to the HSS 406 and the HSS 400 sends an Cx-LIA (ServerCap.) message 403 back. In response, the I-CSCF 400 sends an SIP request 405 to the S-CSCF 407 The I-CSCF 400 sends an S-CSCF message to itself.

Tthe I-CSCF shall firstly query the HSS again via a Cx-LIA(User ID, CapFlag) request (4302), with the explicit request for the Server Capabilities of the user. After the I-CSCF receives the Server Capabilities of the user from the HSS via Cx-LIA response (4303), the I-CSCF shall re-select another S-CSCF from its list of S-CSCFs according to the capabilities and forward the request to the newly selected S-CSCF. This is an extension to the Cx-LIR/LIA operation.

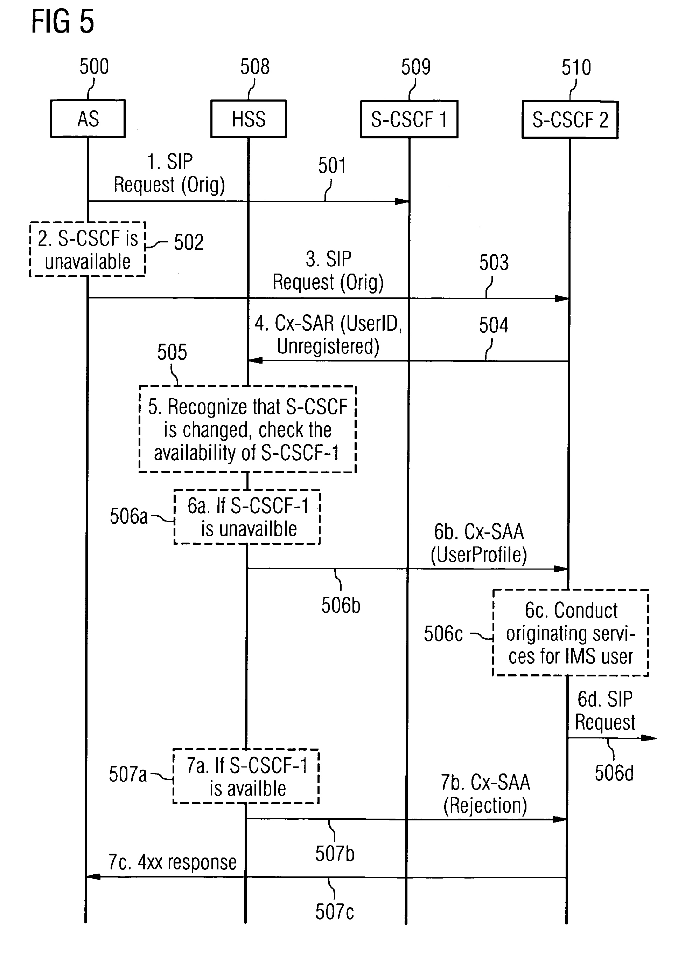

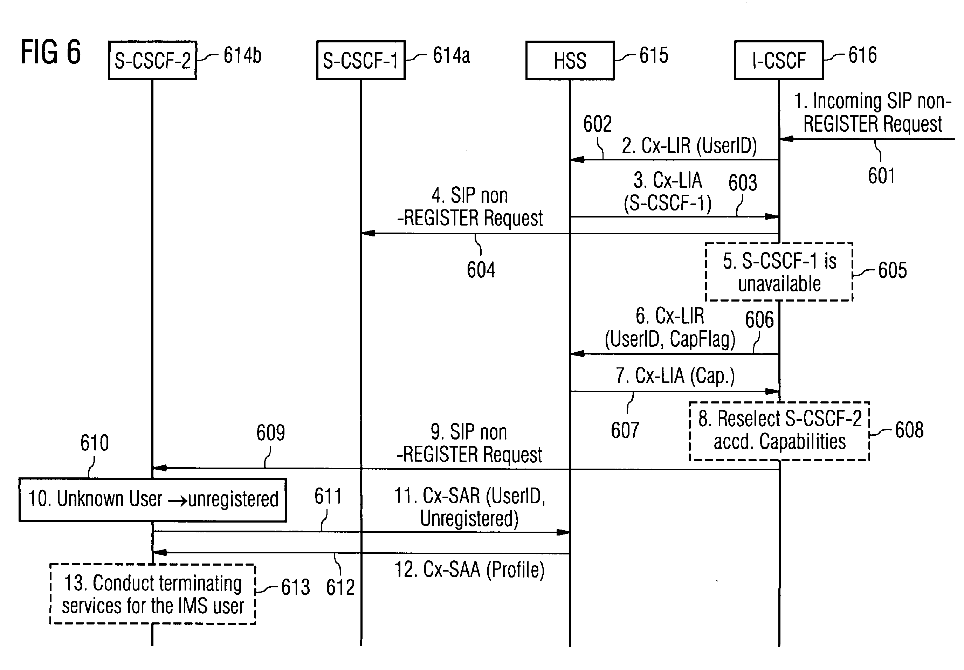

With the proposal described (S-CSCF re-assignment) or (S-CSCF re-selection), an unregistered user can receive service from the new S-CSCF, when the previously assigned S-CSCF for this user is not available. In the following it is showed how an originating (Figure 5) or a terminating request (Figure 6) for an unregistered user can be delivered even when the previously assigned S-CSCF is not available.

In Figure 5, the AS 500 sends an SIP Request(Orig) message 501 to the S-CSCF-1 509. 502 indicates that the S-CSCF is unavailable and the AS sends an SIP Request(Orig) to the S-CSCF-2 510, which in turn sends an Cx-SAR(UserID, Unregistered) message 504 to the HSS 508. 505 indicates that the S-CSCF is changed and that the availability of the S-CSCF-1 should be checked. If, in decision step 506a, the S-CSCF-1 is unavailable, the HSS 508 sends an Cx-SAAA(UserProfile) message 506b to the S-CSCF-2 510. 506c indicates that and originating services for the IMS user is to be conducted. In response, an SIP request 506d is sent. The 507a decision step determines that the S-CSCF-1 is available and, in response, the Cx-SAA(Rejection) message 507b is sent to the S-CSCF-2 510, which in turn sends an 4xx response 507c to the AS 500.

In Figure 6, an incoming SIP Request 601 is received by the I-CSCF 616 and the I-CSCF 616 sends an Cx-LIR (UserID) message 602 to the HSS 615. In return, a Cx-LIA (S-CSCF-1 Addr) message 603 is sent to the I-CSCF 616 and an SIP Request 604 is sent to the S-CSCF-1 614a. 605 indicates that the S-CSCF-1 614a is unavailable and the I-CSCF 616 sends an Cx-LIR (UserID, CapFlag) 606 to the HSS 615, which in turn sends a Cx-LIA (Cap.) message 607 to the I-CSCF 616. 608 indicates that the S-CSCF-2 614b is reselected according to its capabilities and the I-CSCF 616 sends an SIP Request 609 to the S-CSCF-2 614b. 610 indicates the user ID is an unknown user and is treated by S-CSCF-2 614b as unregistered and the S-CSCF 2 614b sends an Cx-SAR (UserID, Unregistered) message 611 to the HSS 615, which in turn returns an Cx-SAA (Profile, RegInfo) message 612 to the S-CSCF-2 614b. 613 indicates that services are terminated for the IMS user.

## Claims

1. A method for re-assigning Serving Call Session Control Function, S-CSCF (307), services to an un-registered user, hereafter the user, who is of a Home Subscriber Server, HSS (300), in a Third Generation Partnership Program, 3GPP, telecommunications network, comprising:
previously assigning S-CSCF (307) services to the user including a registration procedure,
wherein access by the user to the S-CSCF (307) services is erroneously lost,
**characterized in that**,
re-assigning the user to the S-CSCF (307) server previously selected if that S-CSCF (307) is presently available;
in case that the S-CSCF (307) is not available, causing an I-CSCF (306) to not reject a request to reassign re-select another S-CSCF for the user, and
re-assigning by the HSS (300) the S-CSCF (307) contained in a Cx-SAR request (504) to the user and providing a user profile of the unregistered user to a new S-CSCF (307).

2. The method according to claim 1, wherein when the HSS (300) receives a Cx-SAR request (504) for the unregistered user and the S-CSCF (307) address in the Cx-SAR request (504) is different than an S-CSCF (307) address stored as assigned for that user at the HSS (300), the HSS (300) shall firstly check the availability of the S-CSCF (307), whose address is stored at the HSS (300).

3. The method according to claim 1, the availability of the S-CSCF (307) is checked by the HSS (300) by using a diameter peer state table, where the connection states of S-CSCF (307)s are stored.

4. The method according to claim 1, the availability of the S-CSCF (307) is checked by the HSS (300) by sending a Cx-PPR request containing the current user profile or charging function address to the S-CSCF (307), and if no response is received, the S-CSCF (307) is determined as unavailable.

5. The method according to claim 1, wherein the I-CSCF (306) conducts S-CSCF (307) re-selection procedure by
querying the HSS (300) again via a Cx-LIA request (302), with the explicit request for Server Capabilities of the user,
after the I-CSCF (306) receives the Server Capabilities of the user from the HSS (300) via Cx-LIA response (303), the I-CSCF (306) shall re-select another S-CSCF (307) from its list of S-CSCF (307)s according to the capabilities and forwards the request to the newly selected S-CSCF (307).
